# EUROPÄISCHE PATENTSCHRIFT

(11) **EP 2 497 714 B1**
(45) Veröffentlichungstag und Bekanntmachung des Hinweises auf die Patenterteilung: **18.09.2013**
(21) Anmeldenummer: 12000561.6
(22) Anmeldetag: 28.01.2012
(51) Int. Cl.: B64G 1/62, B64G 1/10, B64G 1/64

(54) **Bergungs- und Abbremsvorrichtung für frei im All fliegende Objekte**
Recovery and braking device for objects flying freely in space
Dispositif de dégagement et de freinage pour des objets volant librement dans l'espace

(30) Priorität: 08.03.2011 DE 102011013875
(43) Veröffentlichungstag der Anmeldung: 12.09.2012
(73) Patentinhaber: Astrium GmbH, 82024 Taufkirchen (DE)
(72) Erfinder: Brüge, Uwe, 28259 Bremen (DE); Starke, Jürgen, D-28355 Bremen (DE); Bischof, Bernhard, 27777 Ganderkesee (DE); Sommer, Josef, 28844 Weyhe (DE); Dumke, Michael, 23844 Bad Oldesloe (DE)
(74) Vertreter: Hansmann, Dierk

(56) Entgegenhaltungen:
- DE-B4- 10 342 953
- DE-B4- 10 342 954
- DE-B4-102004 004 543
- JP-A- 7 251 799

## Beschreibung

Die Erfindung betrifft eine Bergungs- und Abbremsvorrichtung für frei im All fliegende Objekte, insbesondere zum Einfangen von Satelliten und anderen orbitalen Objekten, bestehend aus einem als lenkbares, mit wenigstens einem Lageregelungstriebwerk ausgerüstetes Trägerfahrzeug dienenden Raumfahrzeug, an dem wenigstens eine mit diesem verbundene und von diesem zu startende, abtrennbare und mit wenigstens einem eigenen Treibsatz und einer Fangvorrichtung in Form eines verschließbares Fangnetzes ausgestattete Einfangeinheit angeordnet ist.

Vorrichtungen dieser Art haben die Funktion, frei im Weltall fliegende Zielobjekte, beispielsweise einen Satelliten, die Oberstufe einer Rakete oder aber eine beliebige andere Art von Weltraummüll, einzufangen. Aktiviert werden solche Vorrichtungen im allgemeinen von Bord einer im All befindlichen Orbitalplattform aus. So ist aus der DE 103 42 954 B4, welche als nächstliegender, bekannter Stand der Technik betrachtet wird, eine Vorrichtung der eingangs genannten Art bekannt geworden, bei der ein Fangnetz vorgesehen ist, das an seinem äußeren Rand Gewichte aufweist: Dem Netz wird beim Start aus einer an der Orbitalstation angeordneten Abschussvorrichtug ein Impuls derart vermittelt, dass es sich aufgrund der auf die Gewichte einwirkenden Trägheit anschließend selbsttätig öffnet. Daneben sind für diesen Verwendungszweck aber auch Robotiksysteme bzw. mechanische Greifvorrichtungen bekannt geworden, die auf einem frei fliegenden System angeordnet sind, das seinerseits mit einer Orbitalplattform verbunden ist. Eine solche Vorrichtung ist beispielsweise in der DE 103 42 953 B4 beschrieben.

Darüber hinaus ist aus der JP 7 251 799 A eine Vorrichtung der eingangs genannten Art bekannt geworden, mit deren Hilfe orbitale Elemente bzw. Debris eingefangen, zum Trägerfahrzeug verbracht und dort aufgenommen werden sollen. Das aus einem Trägerfahrzeug und mehreren Einfangeinheiten bestehende System verbleibt mit den eingefangenen Debriselementen im Orbit beziehungsweise es kehrt mit diesen zu einer Raumstation, von der aus es gestartet wurde, zurück.

Aufgabe der vorliegenden Erfindung ist es, eine derartige Vorrichtung so auszubilden, dass sie auf einfache und zuverlässige Weise eine Rückkehr der mit dieser Vorrichtung eingefangenen Objekte zur Erde ermöglicht.

Die Erfindung löst diese Aufgabe, indem sie vorsieht, dass bei einer derartigen Vorrichtung jede Einfangeinheit über eine Leine lösbar mit dem Fangnetz verbunden ist und daß der Treibsatz mit wenigstens einer als Abbremsvorrichtung ausgebildeten Schubdüse ausgerüstet ist.

Nach erfolgter Ausführung eines Einfangmanövers durch die erfindungsgemäße Bergungsvorrichtung ist somit eine dann abgedockte Einfangeinheit in der Lage, über eine flexible Verbindung einen erdnahen, massereichen und unkooperativen Körper, z. B. einen Satelliten, eine Raketen-Oberstufe oder ein großes Bruchstück, zu einem Wiedereintritt in die Erdatmosphäre mit einem definiertem Zielgebiet auf der Erdoberfläche zu zwingen. Unter Berücksichtigung des Systemverhaltens der flexibel gekoppelten Objekte ist auch ohne eine aktive Lagekontrolle eine ausreichende Lagestabilität und Genauigkeit gewährleistet, wenn eine ziehende Kraft wirkt.

Die Erfindung ermöglicht den gezielten Wiedereintritt des aus der jeweiligen Einfangeinheit und dem von diesen eingefangenen Objekt mit der geringst möglichen Komplexität, wobei eine derartige Einfangeinheit nur für ein Manöver verwendet wird und für eine effiziente Gesamtmission mehrere derartige Einfangeinheiten an einer Bergungsvorrichtung vorgesehen sind. Dabei wirken sich auch Massenersparnisse durch das Weglassen nicht unbedingt benötigter Subsysteme an den einzelnen Einfangeinheiten und deren Konzentration auf das Trägerfahrzeug positiv auf das Massenbudget der Gesamtmission aus, ebenso wie dies Kostenersparnisse beim Bau der gesamten Bergungsvorrichtung ermöglicht.

Die Erfindung erlaubt es damit, Satelliten und andere orbitale Objekte, die nicht selbst in der Lage sind, den eigenen Wiedereintritt zu erzwingen, sicher und zuverlässig aus der Weltraumumgebung zu entfernen. Dies ermöglicht gerade in hochfrequentierten Umlaufbahnen zur Erdbeobachtung eine deutliche Verringerung des Gefahrenpotentials für Kollisionen und erhöht damit die Sicherheit der Raumfahrt im Allgemeinen.

Weiterhin sind Bewegungen des Zielobjektes in begrenzter Form unkritisch für das Funktionieren der Bergungsvorrichtung nach der Erfindung. Auch kann durch die gemäß der Erfindung vorgesehene Ausbildung der Schubdüse als Abbremsvorrichtung jederzeit ein sicherer Abstand zwischen dem Zielobjekt und der Bergungsvorrichtung eingehalten werden. Schließlich können mehrere Einfangeinheiten zu einer Serien- oder Parallelschaltung zusammengefasst sein.

Nachfolgend soll die Erfindung anhand von in der Zeichnung dargestellten Ausführungsbeispielen näher erläutert werden. Es zeigen
- Fig. 1:: eine schematische Darstellung des Aufbaus einer Bergungsvorrichtung in Frontansicht,
- Fig. 2:: eine schematische Darstellung einer Mission der Bergungsvorrichtung gemäß Fig. 1,
- Fig. 3 und 4:: verschiedene Phasen eines Einfangmanövers durch eine Bergungsvorrichtung gemäß Fig. 1,
- Fig. 5:: eine Übersicht über ein aus einer Einfangeinheit und einem eingefangenen Objekt bestehenden System und
- Fig. 6:: mögliche Bahnhöhen eines aus einer Einfangeinheit und einem eingefangenen Objekt bestehendes Systems, die zum direkten Wiedereintritt führen würden.

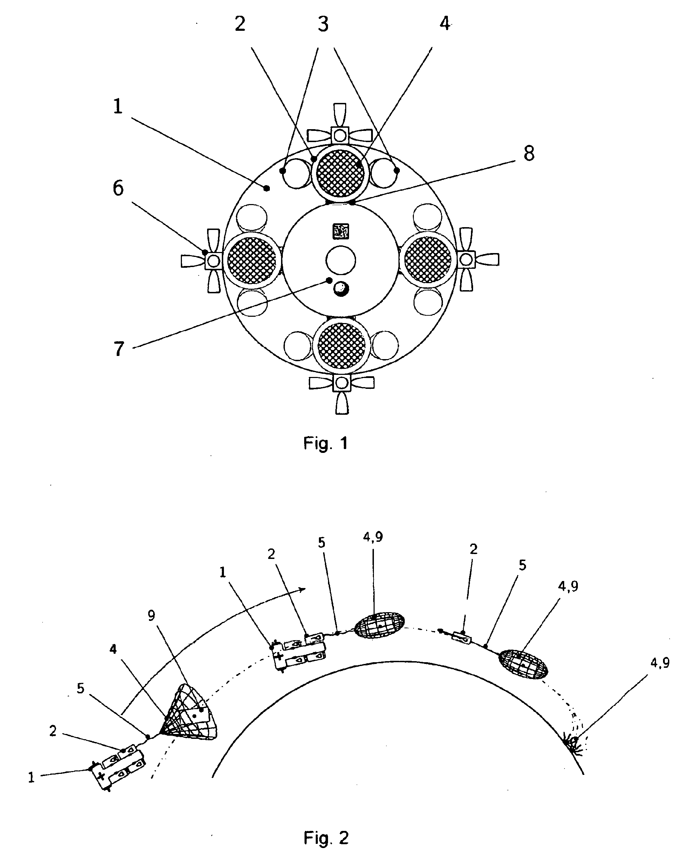

In Fig. 1 ist schematisch eine Frontansicht der Bergungsvorrichtung dargestellt, die aus einem Trägerfahrzeug 1 besteht, an dem abtrennbare Einfangeinheiten 2 befestigt sind. Letztere enthalten jeweils einen Treibsatz und sind mit Schubdüsen 3 ausgestattet. Bei dem hier dargestellten Ausführungsbeispiel trägt jede Einfangeinheit 2 ein zunächst zusammengefaltetes Netz 4, das sich, nachdem es aus der Einfangeinheit 2 ausgestoßen wurde, entfaltet und das dann über ein in dieser Figur nicht erkennbares Seil 5 mit der Einfangeinheit 2 verbunden bleibt. Das Trägerfahrzeug 1, an dem die Einfangeinheiten 2 angeordnet sind, ist ferner mit - im Fall des hier beschriebenen Ausführungsbeispiels vier - umfangsseitig verteilt angeordneten Lageregelungstriebwerken 6 sowie mit einer Navigationseinheit 7 versehen. Die Einfangeinheiten 2 sind über als Verbindungsklammern ausgebildete Halterungen 8 lösbar am Trägerfahrzeug 1 angebracht.

In Fig. 2 ist in schematischer Form eine exemplarische Mission der vorangehend beschriebenen Bergungsvorrichtung, das Einfangen eines sich im Weltraum unkontrolliert bewegenden Objektes 9, dargestellt. Die Mission beginnt mit einem Manöver des Trägerfahrzeuges 1, das mit den Lageregelungstriebwerken 6 und der Navigationseinheit 7 alle nötigen System für eine aktive Kontrolle seiner Position und Lage besitzt, um diejenigen Orbitmanöver durchzuführen, die notwendig sind, um Objekte 9 in Umlaufbahnen anzusteuern und zu verfolgen.

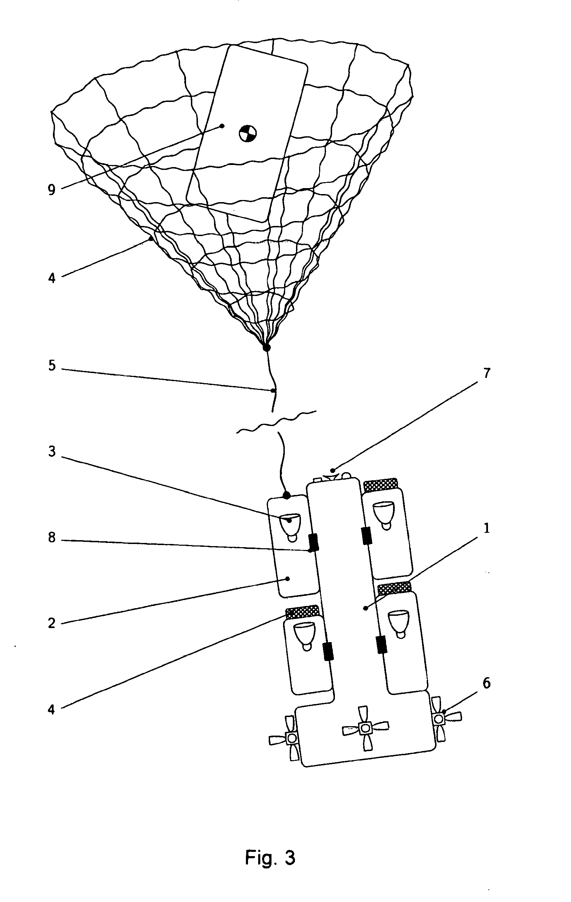

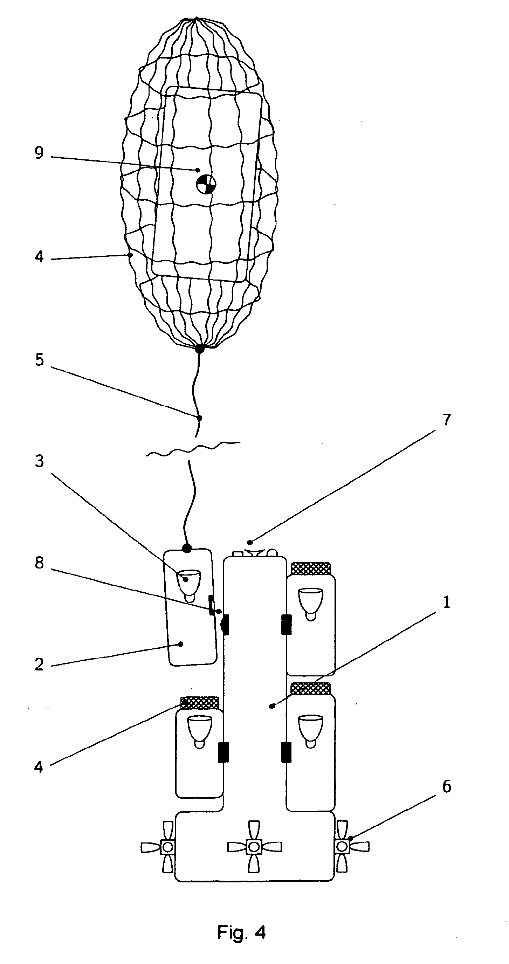

Sobald das Trägerfahrzeug 1 mit Unterstützung seiner optischen, lasergestützten oder radarbasierten Navigationseinheit 7 das einzufangende Objekt 9 angeflogen hat, verharrt es in einer vorgebbaren Entfernung zu diesem Objekt 9. Das nun erfolgende Einfangmanöver ist im Detail in den Figuren 3 und 4 dargestellt. Zur Durchführung dieses Manövers muss die für die Ausführung vorgesehene Einfangeinheit 2 gegebenenfalls zunächst zur Vorderkante des Trägerfahrzeuges 1 befördert werden, um den Öffnungswinkel des Netzauswurfs zu berücksichtigen.

Die ausgerichtete Einfangeinheit 2 des Trägerfahrzeugs 1 stößt nun das in ihr befindliche Netz 4 aus, das sich um das einzufangende Objekt 9 legt und das sich anschließend auf der gegenüberliegenden Seite selbsttätig schließt. Das Netz 4 bleibt über das Seil 5 mit dem Trägerfahrzeug 1 bzw. mit der zunächst noch an dieser gehalterten Einfangeinheit 2 verbunden. Mit Hilfe der flexiblen Verbindung zwischen dem Objekt 9 und der Einfangeinheit 2 wird das Objekt 9 stabilisiert und für das Bremsmanöver entgegen der Flugrichtung ausgerichtet, in dem das Trägerfahrzeug 1 mittels Schubimpulsen der Lageregelungstriebwerke 6 das Seil 5 im richtigen Moment strafft oder entspannt.

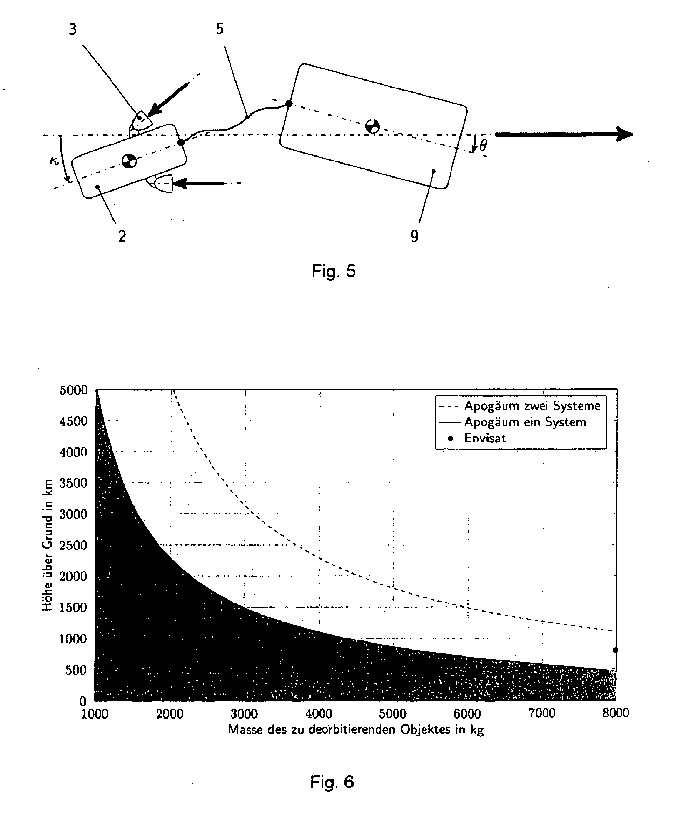

Im optimalen Fall nehmen zum Ende des Manövers die Einfangeinheit 2 und das einzufangende Objekt 9 eine horizontale und stabile Lage ein. Die bis dahin noch am Trägerfahrzeug 1 angedockte Einfangeinheit 2 wird nun über die lösbare Verbindungsklammer 8 vom Trägerfahrzeug 1 ausgesetzt und stellt damit ein eigenes kleineres Raumfahrzeug dar. Ab diesem Zeitpunkt ist das System aus Einfangeinheit 2 und einzufangendem Objekt 9 eigenständig und es existiert, wie in Fig. 5 erkennbar, keine mechanische Verbindung mehr zum Trägerfahrzeug 1. Allerdings wird nach dem Abdocken eine Funkverbindung zwischen dem Trägerfahrzeug 1 und der Einfangeinheit 2 aufgebaut, um zumindest die Zündung des in der Einfangeinheit 2 befindlichen Triebwerks einzuleiten, zugleich können auch Daten- oder Kommandoübertragungen für Missionserweiterungen über diese Verbindung abgewickelt werden. Es ist zwar alternativ dazu auch eine direkte Funkstrecke von der Einfangeinheit 2 zu einer Bodenstation möglich, dies würde jedoch die Komplexität der gesamten Systems merklich erhöhen und böte zugleich keine wesentlichen Vorteile gegenüber der hier beschriebenen Variante, in der das Trägerfahrzeug 1 als Relaisstation genutzt wird.

Die Einfangeinheiten 2 sind konstruktiv so einfach wie möglich aufgebaut und bestehen hauptsächlich aus einem Treibsatz für ein Raketentriebwerk, einer einfach gehaltenen Steuerelektronik für die Zündsequenz dieses Triebwerks und, falls erforderlich, einem Mechanismus zum Durchtrennen des Seiles 5. Die Einfangeinheiten 2 besitzen weder Systeme zur Lagebestimmung noch zur Lageregulierung, ein einfaches System zur Ortsbestimmung auf der Basis eines Satellitennavigationssystems kann allerdings vorgesehen werden, um den Trennvorgang auf der Basis von dessen Ortsdaten auszulösen.

Als Grundvoraussetzung für eine erfolgreiche Durchführung des Einfang- und Abbremsmannövers dürfen die Einfangeinheit 2 und das einzufangende Objekt 9 nur eine geringe Abweichung vom gemeinsamen Orbit und auch nur geringe rotatorische Restgeschwindigkeiten aufweisen, d.h., sie müssen nahezu horizontal ausgerichtet sein, wie schematisch in Fig. 5 gezeigt ist. Daher müssen die in Fig. 5 dargestellten Winkel κ und θ vor dem Aussetzen der Einfangeinheit 2 so klein wie möglich gehalten werden.

Nachdem sich das Trägerfahrzeug 1 aus dem Gefahrenbereich entfernt hat und der korrekte Zeitpunkt für das Wiedereintrittsmanöver erreicht ist, wird das Zündkommando gesendet und bei Verwendung eines hier beschriebenen Feststofftriebwerks wird so lange Schub produziert, wie in der Einfangeinheit 2 Treibstoff vorhanden ist. Die entgegen der Flugrichtung wirkende Schubkraft führt zu einer Bahnabstiegstrajektorie, die durch ein einzelnes Manöver zu einem Wiedereintritt führt. Eine Stabilisierung nach dem Manöver ist nicht notwendig, Kollisionen sind erlaubt.

Fig. 6 zeigt Bahnhöhen, aus denen ein aus einer Einfangeinheit 2 und einem eingefangenem Objekt 9 variabler Masse bestehendes System mit einem im Fall des hier beschriebenen Ausführungsbeispiels angenommenen Masse der Einfangeinheit 2 von ca. 650 kg zum gezielten Wiedereintritt gezwungen werden kann.

Damit das Landegebiet für die nicht verbrannten Bruchstücke des Objektes eingegrenzt werden kann, ist die Treibstoffmasse der Einfangeinheit 2 möglichst exakt an die Masse des zu bergenden Objektes 9 angepasst bzw. wird die Orbithöhe, in der der Treibsatz gezündet wird, derart gewählt, dass bei vorgegebener Treibstoffmasse das gewünschte Einschlagsgebiet getroffen wird. Letzteres ist in Fig. 6 dargestellt für eine Einfangeinheit mit 500 kg Festtreibstoffmasse.

Weiterhin ist eine Serien- oder Parallelschaltung mehrerer Einfangeinheiten 2 oder eine angepasste Größe der einzelnen Einfangeinheiten 2 bzw. deren Treibsätze möglich, um besonders schwere Objekte aus hochgelegenen Orbits direkt zu deorbitieren. Envisat, ein etwa acht Tonnen schwerer Satellit, kann auf diese Weise nach Ablauf seiner Mission mit zwei Einfangeinheiten 2 der hier angenommenen Treibstoffmasse direkt zum Wiedereintritt gezwungen werden. Für Konstellationen aus einer bzw. zwei Einfangeinheiten 2 und einem eingefangenen Objekt 9, die direkt auf einer der beiden in Fig. 6 dargestellten Kurven liegen, erfolgt der Wiedereintritt bei einem Eintrittswinkel von zwei Grad in 120 km Höhe, was als Mindestkriterium für einen gesicherten Wiedereintritt gilt.

Auch das Vorsehen eines Mechanismus zum Durchschneiden des Verbindungsseiles zwischen der Einfangeinheit 2 und dem eingefangenen Objekt 9 ist möglich, um das Landegebiet genauer eingrenzen zu können. In diesem Fall wird die Treibstoffmasse mit einer Reserve berechnet, die dazu dient, die Schubverluste auszugleichen, die die Eigenbewegung der Einfangeinheit 2 verursacht. Solange in der Brennphase des Triebwerks der Einfangeinheit 2 weniger Verluste auftreten als in einem angenommenen Worst-Case-Szenario, besitzt das aus der Einfangeinheit 2 und dem eingefangenen Objekt 9 bestehende System ein höheres Bahnänderungspotential als benötigt. Dies könnte zu einem Verfehlen des vorgesehenen Landegebietes führen, sofern nicht die Verbindung zwischen der Einfangeinheit 2 und dem eingefangenen Objekt 9 im richtigen Moment getrennt wird. Dadurch wird das Objekt 9 nicht mehr beschleunigt und fliegt sehr nahe an der vorgesehenen Wiedereintrittsbahn im Gegensatz zur Einfangeinheit 2, deren Triebwerk bis zum Brennschluss die Eintrittsbahn zu verändern vermag. Durch eine geeignete Wahl der Werkstoffe, die für den Bau der Einfangeinheit 2 verwendet werden, kann zudem mit hoher Sicherheit dessen vollständiges Verglühen beim Wiedereintritt in die Erdatmosphäre gewährleistet werden.

## Patentansprüche

1. Bergungs- und Abbremsvorrichtung für frei im All fliegende Objekte, insbesondere zum Einfangen von Satelliten und anderen orbitalen Objekten, bestehend aus einem, als lenkbares, mit wenigstens einem Lageregelungstriebwerk ausgerüstetes Trägerfahrzeug dienenden Raumfahrzeug, an dem wenigstens eine mit diesem verbundene und von diesem zu startende, abtrennbare und mit wenigstens einem eigenen Treibsatz und einer Fangvorrichtung in Form eines verschließbaren Fangnetzes ausgestattete Einfangeinheit angeordnet ist, **dadurch gekennzeichnet, dass** jede Einfangeinheit (2) über eine Leine (5) lösbar mit dem Fangnetz (4) verbunden ist und daß der Treibsatz mit wenigstens einer als Abbremsvorrichtung ausgebildeten Schubdüse (3) ausgerüstet ist.

2. Vorrichtung nach Anspruch 1, **dadurch gekennzeichnet, dass** vier Einfangeinheiten (2) am Trägerfahrzeug (1) gehaltert sind.

3. Vorrichtung nach Anspruch 2, **dadurch gekennzeichnet, dass** mehrere Einfangeinheiten (2) zu einer Serien- oder Parallelschaltung zusammengefasst sind.

## Claims

1. Recovery and braking device for objects flying freely in space, particularly for capturing satellites and other orbital objects, said device consisting of a spacecraft which serves as a steerable carrier vehicle equipped with at least one attitude-control propulsive unit and on which there is arranged at least one separable capturing unit which is connected to said spacecraft and is to be launched from the latter and which is equipped with at least one propellant charge of its own and a catching device in the form of a closable catching net, **characterised in that** each capturing unit (2) is detachably connected to the catching net (4) via a line (5), and that the propellant charge is equipped with at least one thrust nozzle (3) which is constructed as a braking device.

2. Device according to Claim 1, **characterised in that** four capturing units (2) are mounted on the carrier vehicle (1).

3. Device according to Claim 2, **characterised in that** a number of capturing units (2) are combined to form a series or parallel circuit arrangement.

## Revendications

1. Dispositif de dégagement et de freinage pour des objets, qui volent librement dans l'espace, en particulier pour l'interception de satellites et d'autres objets orbitaux, lequel dispositif consiste en un engin spatial, qui sert de véhicule porteur, dirigeable, équipé d'au moins un système propulseur régulateur de position, et auquel est associée au moins une unité d'interception, qui, pouvant être démarrée à partir de lui, est amovible et est pourvue d'au moins son propre bloc propulseur et d'un dispositif d'interception, qui présente la forme d'un filet de piégeage pouvant être fermé, **caractérisé en ce que** chaque unité d'interception (2) est reliée, de manière amovible, au filet de piégeage (4) et que le bloc propulseur est équipé d'au moins une tuyère de poussée (3), en tant que dispositif de freinage.

2. Dispositif selon la revendication 1, **caractérisé en ce que** quatre unités d'interception (2) sont fixées sur le véhicule porteur (1).

3. Dispositif selon la revendication 1, **caractérisé en ce que** plusieurs unités d'interception (2) sont groupées en couplage en série ou en couplage parallèle.
